# EUROPEAN PATENT SPECIFICATION

(11) **EP 3 641 536 B1**
(45) Date of publication and mention of the grant of the patent: **17.01.2024**
(21) Application number: 18731119.6
(22) Date of filing: 21.06.2018
(51) Int. Cl.: A01K 61/10, A01K 29/00, A01K 63/06, H05B 47/16

(54) **A LIGHTING CONTROLLER, LIGHTING SYSTEM, AND SALMON FARMING SYSTEM**
BELEUCHTUNGSSTEUERGERÄT, BELEUCHTUNGSSYSTEM UND LACHSZUCHTSYSTEM
ORGANE DE COMMANDE D'ÉCLAIRAGE, SYSTÈME D'ÉCLAIRAGE ET SYSTÈME D'ÉLEVAGE DE SAUMONS

(30) Priority: 22.06.2017 EP 17177335
(43) Date of publication of application: 29.04.2020
(73) Proprietor: Signify Holding B.V., 5656 AE Eindhoven (NL)
(72) Inventor: MIGAUD, Herve, 5656 AE Eindhoven (NL); TANASE, Cristina, 5656 AE Eindhoven (NL); MOLS, Rainier Franciscus Xaverius Alphonsus Marie, 5656 AE Eindhoven (NL); CLOKIE, Ben, 5656 AE Eindhoven (NL)
(74) Representative: Vanden Wyngaert, Hilbrand
(86) International application number: PCT/EP2018/066505
(87) International publication number: WO 2018/234422

(56) References cited:
- WO-A1-2014/115009
- CN-A- 104 115 775
- US-A- 4 379 437
- TIMOTHY L. HOFFNAGLE ET AL: "Effect of Three Hatchery Lighting Schemes on Indices of Smoltification in Chinook Salmon", PROGRESSIVE FISH-CULTURIST, vol. 60, no. 3, 1 June 1998 (1998-06-01), pages 179-191, XP055427660, US ISSN: 0033-0779, DOI: 10.1577/1548-8640(1998)060<0179:EOTHLS>2.0 .CO;2

## Description

### FIELD OF THE INVENTION

The invention relates to a lighting controller, a lighting system containing such a lighting controller and a method of controlling a lighting system. The invention also relates to a salmon farming system.

### BACKGROUND OF THE INVENTION

It is known that fish like Atlantic salmon undergo significant physiological changes depending on the life stage of the fish. For example, wild salmon eggs are laid in freshwater streams typically at high latitudes. The salmon eggs hatch into alevin or sac fry. The fry quickly develop into parr with camouflaging vertical stripes. The parr become smolts under certain environmental conditions. The smolts' body chemistry changes, allowing them to live in salt water. The smolts then move to salt water and keep on growing. The smolts stay in salt water until environmental conditions trigger them to mature, and after a period of time they swim back to fresh water to reproduce.

One of the most important developmental triggers for fish is light. In particular, Atlantic salmon are very sensitive to light, both for smoltification during the freshwater stage and during the maturation stage in sea water. In these development processes changes of day length ensure that these developmental changes occur at the optimum timings required for move to the next developmental phase. Smoltification is one such event, freshwater parr become seawater capable smolts to coincide with environmental conditions such as increasing water temperatures and the subsequent increased availability of food.

In the aquaculture industry these signals are used to cause the fish to develop faster, which in industrial terms can lead to all year round salmon production and shorter production cycles. Manipulation of the photoperiod signal allows smolts to be produced out of season for the stocking of on-growing pens to meet year round consumer demand.

It is an object of the present disclosure to provide a lighting controller, lighting system, lighting method, and salmon farming system that overcomes problems associated with conventional devices and systems.

WO 2014/115009 A1 relates to the field of light sources and illumination systems for aquaculture applications wherein the light intensity of the light source can be controlled accurately, particularly at low light intensities. This document mentions that a typical breeding cyclus for atlantic salmon is as follows. First, juveniles experience no / little light while in alevin stage followed by a continous 24 hour low lighting regime for a certain period of time. Then, a photoperiodic regime follows for a period of 6-8 weeks follows in order to induce smoltification, during which the fish are exposed to alternating periods of darkness and light of low intensity within 24 hours. After the period of 6-8 weeks, the fish are moved in a transfer tank wherein the fish is kept continously under artificial low light level to complete smoltification and prepare for sea transfer. The last step in this process is moving the fish to a sea cage for further growth.

### SUMMARY OF THE INVENTION

According to an aspect of the present invention, there is provided a lighting controller for a lighting system that comprises a lighting apparatus including one or more lights arranged to provide light to promote smoltification salmon in a volume of water; wherein the lighting controller is arranged to: send control information to the lighting system to control light output of the lighting apparatus so that continuous light is provided to the volume of water for a first predetermined period lasting at least 24 hours; and send control information to the lighting system to control light output of the lighting apparatus so that a plurality of simulated day periods and night periods are provided to the volume of water for a second predetermined period, the second predetermined period following the first predetermined period; wherein, during the second predetermined period, an intensity of the light provided to the volume of water in a night period is non-zero and up to 20% of an intensity of the light provided to the volume of water in a day period.

Also disclosed herein is a method for improving the development of salmon by providing a certain light regime. This can be used for salmon smoltification using a day-night rhythm where the night is not completely dark but illuminated with very little light. The percentage of light intensity during the night time is below 20% of the light intensity during the day. The fish smoltify faster under this regime than under day-night regime with complete darkness during the night. This lighting regime can be applied in order to improve the development of fish in onshore, offshore and marine environment applications. The salmon may be Atlantic salmon.

By keeping the fish under very little light during the night periods of the second predetermined period, the gene expression related to smoltification process is active and amplified due to little light during the night, and this helps accelerate the smoltification process.

In some embodiments, the intensity of the light provided to the volume of water in the night period is from 0.1% to 20% of the intensity of the light provided to the volume of water in the day period. In other embodiments, the night period is from 0.1% to 10% of the intensity of the light provided to the volume of water in the day period.

In some embodiments, during the second predetermined period, the day periods are shorter in length than the night periods. In some embodiments, the night periods are from 12 to 18 hours and the day periods are from 6 to 12 hours.

In some embodiments, the first predetermined period lasts from 300 to 600 degree days. In some embodiments, the first predetermined period lasts from 350 to 450 degree days

In some embodiments, the second predetermined period lasts a plurality of day and night periods (e.g. over several days). In some embodiments, the second predetermined period lasts from 300 to 600 degree days. In some embodiments, the second predetermined period lasts from 350 to 450 degree days.

In some embodiments, the lighting controller is further arranged to send control information to the lighting system to control light output of the lighting apparatus so that continuous light is provided to the volume of water for a third predetermined period after the second predetermined period, wherein the third predetermined period lasting at least 24 hours. In some embodiments, the third predetermined period lasts from 300 to 600 degree days. In other embodiments, the third predetermined period lasts from 350 to 450 degree days.

In some embodiments, the lighting controller is further arranged to send control information to the lighting system to control light output of the lighting apparatus so that the light provided to the volume of water in each predetermined period has an increased intensity of blue light when compared to white light (spectrum between 400nm and 780nm which is perceived by humans as white light). In other embodiments, the lighting controller is arranged to send control information to the lighting system to control light output of the lighting apparatus so that the light provided to the volume of water in one of the predetermined periods (e.g. the first, second or third) has an increased intensity of blue light when compared to white light.

In some embodiments, the increase in intensity of blue light when compared to white light is greater than 10%. Some embodiments may use all blue light.

Increasing the amount of blue light (in spectrum 400 nm - 500 nm) advances smoltification, resulting in freedom of releasing good quality smolts into salt water.

In some embodiments, the lighting controller is further arranged to send control information to the lighting system to control light output of the lighting apparatus so that the light provided to the volume of water in each predetermined period has a decreased intensity of red light when compared to white light (spectrum between 400nm and 780nm which is perceived by humans as white light). In other embodiments, the lighting controller is arranged to send control information to the lighting system to control light output of the lighting apparatus so that the light provided to the volume of water in one of the predetermined periods (e.g. the first, second or third) has a decreased intensity of red light when compared to white light.

In some embodiments, the decrease in intensity of red light when compared to white light is greater than 10%. Some embodiments may use no red light.

By decreasing the amount of red light (in spectrum between 580nm and 700nm) by at least 10% energy content improves the energy efficiency of the system improving the production parameters such as smoltification, condition factor or growth.

Embodiments of the invention can also provide a lighting system for promoting smoltification of salmon in a volume of water, comprising: a lighting apparatus comprising one or more lights arranged to provide light to the volume of water; and a lighting controller according to any one of the above aspects.

Embodiments of the invention can also provide a salmon farming system, comprising: a tank comprising a volume of water containing aquatic animals; and a lighting system according to the preceding embodiment(s).

There is also provided a method of providing light to salmon in a volume of water to promote smoltification, comprising: providing continuous light to the volume of water for a first predetermined period lasting at least 24 hours; and providing light to the volume of water for a second predetermined period comprising a plurality of simulated day periods and night periods, the second predetermined period following the first predetermined period; wherein, during the second predetermined period, an intensity of the light provided to the volume of water in a night period is non-zero and up to 20% of an intensity of the light provided to the volume of water in a day period.

In some examples, the method comprises providing continuous light to the volume of water for a third predetermined period, the third predetermined period following the second predetermined period.

According to an aspect of the invention, there is provided a computer readable medium carrying computer readable code for controlling a lighting controller to carry out the method of any one of the above aspects.

### BRIEF DESCRIPTION OF THE DRAWINGS

Embodiments of the invention will now be described, by way of example only, with reference to the accompanying drawings, in which:
Figures 1 is a schematic view of a salmon farming system according to an embodiment of the invention;
Figure 2 is flow chart according to a first embodiment of the invention; and
Figure 3 is flow chart according to a second embodiment of the invention.
Figure 4 is graph of experimental data; and
Figure 5 is graph of experimental data.

### DETAILED DESCRIPTION OF THE EMBODIMENTS

Lighting regimes are not the same for every fish producer, with lighting in different illumination patterns being used during the smoltification period across the industry. During the smoltification period, the fish are kept in tanks that are lit by artificial light. A typical conventional lighting regime for Atlantic salmon uses a continuous light regime on parr for a certain period of time (e.g. around 400 degree days), followed by a day/night lighting regime for another period of time (e.g. again around 400 degree days), and followed by another continuous light regime on smolts (e.g. again of around 400 degree days).

In such a conventional day/night lighting regime, there is a "day period" where light is provided and a "night period" in which the light level is zero. In addition, conventional lighting regimes only use white light.

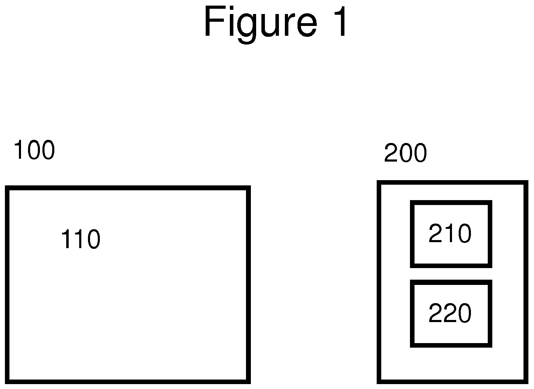

Figure 1 shows a salmon farming system 10 according to an embodiment of the invention.

The salmon farming system 10 comprises a tank 100 comprising a volume of water 110 containing aquatic animals, and a lighting system 200. The tank 100 in this embodiment is situated indoors and so the illumination of the tank 100 is dependent on the light output of the lighting system 200.

The lighting system 200 comprises a lighting apparatus 210 comprising one or more lights arranged to provide light to the volume of water 110 in the tank 100, and a lighting controller 220 arranged to control the lighting apparatus 210.

It will be appreciated that there are many ways that water tanks can be lit, including one or more lights inside and/or outside the water. Embodiments of the invention are not limited to particular structural arrangements of the one or more lights of the lighting apparatus 110 with respect to the tank 100.

In this embodiment, the one or more lights of lighting apparatus 100 are LED modules capable of providing light of different colors, as will be discussed in more detail below, as well as white light (spectrum between 400nm and 780nm which is perceived by humans as white light). Other embodiments may use other light sources.

The lighting controller 220 can control the lighting apparatus 210 to provide different lighting conditions. In other words, the lighting conditions provided by the lighting apparatus 210 are controlled by the lighting controller 220. In this embodiment, the lighting controller 220 is connected to the lighting apparatus 210 by a wired connection, but other embodiments are not limited to this. In other embodiments, the lighting controller 220 may be connected to the lighting apparatus 210 by a suitable wireless network such as WiFi, Bluetooth, GPRS/3G/4G etc. Hence, the lighting controller 220 and the lighting apparatus 210 may by physically connected in the same device or may form one or more separate devices in communication.

Hence, the lighting controller 220 controls a lighting parameter of at least one of the lighting apparatus 210 so as to change the illumination of the water 110 in the tank 100. In this embodiment, this is done by the lighting controller 220 sending suitable control signals (i.e. control information) to the lighting apparatus 210 so as to control the lighting apparatus 210 to illuminate the water 110 in the tank 100 in a certain way. In other embodiments, this is done by the lighting controller 220 sending suitable control information to the lighting apparatus 210 (e.g. that comprises its own controller) so as to enable the lighting apparatus 210 to generate control signals used to control the light of the lighting apparatus 210. Hence, the lighting controller 220 can either directly or indirectly control the lighting apparatus 210.

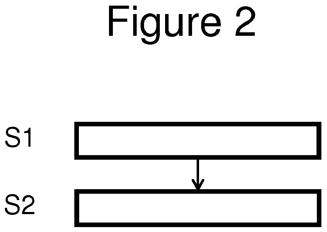

Figure 2 shows a flow chart of a first method of providing light to salmon in a volume of water to promote smoltification. This method uses the aquatic animal growth system 10 as shown in Figure 1.

In step S1, the lighting controller 220 controls the lighting apparatus 210 to provide continuous light to the water 110 in the tank 100 for a first predetermined period. Hence, the first predetermined period corresponds to a continuous lighting regime. In this embodiment, the first predetermined period is 400 degree days. In other embodiments, the first predetermined period lasts from 300 to 600 degree days. In other embodiments, the first predetermined period lasts for over 24 hours, e.g. from 350 to 450 degree days.

In step S2 (after step S1), the lighting controller 220 controls the lighting apparatus 210 to provide light to the water 110 in the tank 100 so that a plurality of simulated day periods and night periods are provided to the volume of water for a second predetermined period. Hence, the second predetermined period corresponds to a day/night lighting regime.

During the second predetermined period (i.e. during step S2), the intensity of the light provided to the water 110 in the tank 100 in each night period is non-zero and up to 20% of an intensity of the light provided to the volume of water in each day period. In other embodiments, the intensity of the light provided to the volume of water in the night period is from 0.1% to 20% of an intensity of the light provided to the volume of water in a day period. In other embodiments, the night period is from 0.1% to 10% of an intensity of the light provided to the volume of water in a day period.

In this embodiment, the second predetermined period is 400 degree days. The second predetermined period may last a plurality of day and night periods (e.g. over several days). In some embodiments, the second predetermined period lasts from 300 to 600 degree days. In other embodiments, the second predetermined period lasts for from 350 to 450 degree days.

In this embodiment, the day periods are "short" corresponding to a short day/long night "winter" lighting regime. In this embodiment, the day periods are 8 hours and the night periods are 14 hours. However, other embodiments could use other day and night period lengths. For example, other embodiments may have a lower limit for the day period of 6 hours and an upper limit of 12 hours, with a night period having a lower limit of 12 hours and an upper limit 18 hours for a 24 hours total day unit.

As discussed below in more detail, the fish smoltify in the tank 100 faster under this regime than under a conventional day/night regime with complete darkness during the night period. This lighting regime can be applied in order to improve the development of fish in onshore, offshore and marine environment application. In general terms, by keeping the fish under very little light, the gene expression related to smoltification process is active and amplified due to little light during the night and this helps accelerate the smoltification process.

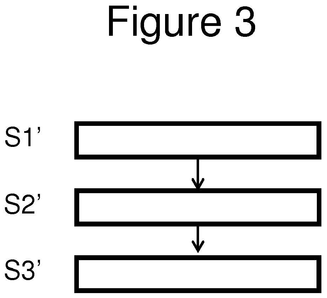

Figure 3 shows a flow chart of a second method of providing light to salmon in a volume of water to promote smoltification. This method uses the salmon farming system 10 as shown in Figure 1.

In this embodiment, in steps S1' and S2' are respectively equivalent to steps S1 and S2 or Figure 2. The difference is that in this embodiment, after step S2' there is a step S3'.

In step S3', the lighting controller 220 controls the lighting apparatus 210 to provide continuous light to the water 110 in the tank 100 for a third predetermined period. Hence, third first predetermined period corresponds to a continuous lighting regime. In this embodiment, the third predetermined period is 400 degree days. In other embodiments, the first predetermined period lasts from 300 to 600 degree days. In other embodiments, the third predetermined period lasts for over 24 hours, e.g. from 350 to 450 degree days.

Provided is a method for improving the development of salmon using a day-night rhythm where the night is not completely dark but illuminated with very little light. The percentage of light intensity during the night time is below 20% of the light intensity during the day. The fish smoltifies faster under this regime than under day-night regime with complete darkness during the night. This lighting regime can be applied in order to improve the development of fish in onshore, offshore and marine environment application.

In the methods of Figures 2 and 3, white light is provided by lighting apparatus 210 to the water 110 in the tank 100 in the first predetermined period, second predetermined period and (if present) third predetermined period.

Using LED lighting for embodiments of the invention has multiple advantages over the conventional lighting. Three of the main advantages of LED are: LED lighting can provide the exact color of light required to initiate different processes in fish; LED lighting intensity can be controlled in order to provide the fish the exact amount of light needed; the rate of change of the light intensity is not possible with traditional lighting. This will trigger either faster and/or better the fish development such as smoltification.

As discussed in more detail below, it has been found that there are benefits in using non-white light.

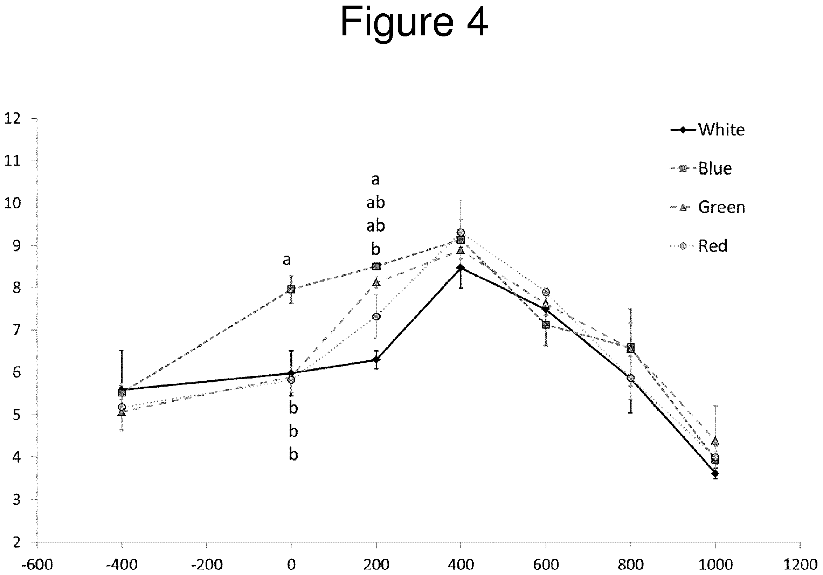

In some embodiments (regardless of whether the method of Figure 2 or 3 is used) light can be provided by the by lighting apparatus 210 to the water 110 in the tank 100 that has an increased amount of blue light (in spectrum between 400 nm and 500 nm) with respect to white light. For example, as discussed in relation to Figure 4, it has been found that increasing the amount of blue light (in spectrum between 400 nm and 500 nm) by at least 10% intensity advances smoltification, resulting in freedom of releasing good quality smolts into salt water.

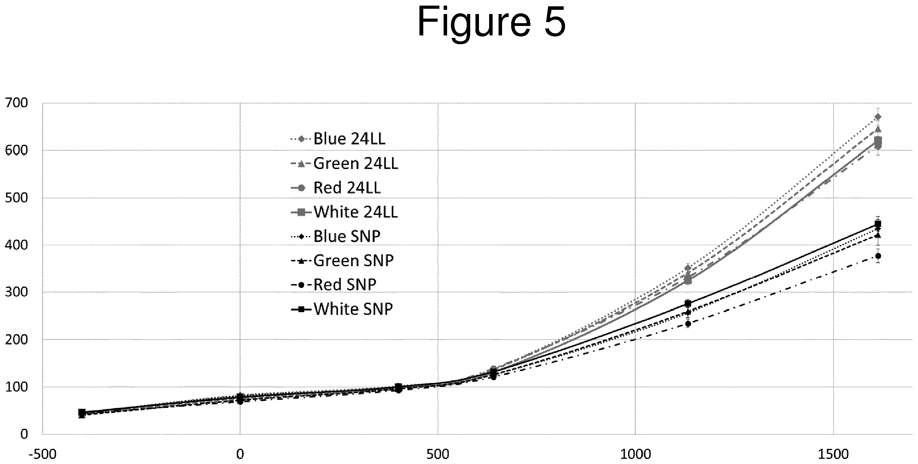

In some embodiments (regardless of whether the method of Figure 2 or 3 is used) light can be provided by the by lighting apparatus 210 to the water 110 in the tank 100 that has an decreased amount of red light (in spectrum between 580nm and 700nm) with respect to white light. For example, as discussed in relation to Figure 5, it has been found that decreasing the amount of red light (in spectrum between 580nm and 700nm) by at least 10% energy content improves the energy efficiency of the system improving the production parameters such as smoltification, condition factor or growth.

Increasing the amount of blue light (in spectrum between 400 nm and 500 nm) advances smoltification, resulting in freedom of releasing good quality smolts into salt water.

By decreasing the amount of red light (in spectrum 580nm - 700nm) by at least 10% energy content improves the energy efficiency of the system improving the production parameters such as smoltification, condition factor or growth. Under red light, it has been found that the salmon has the smallest window for smoltification, meaning that day/night lighting regime can start later and end earlier so you can postpone the smoltification. This occurs when decreased red light is applied for the whole period.

As discussed above, embodiments of the invention can use the method of Figures 2 (S1 + S2) or the method of Figure 3 (S1 + S2 + S3). Both can achieve the same effect. For example, the method of Figure 2 (S 1 + S2) can be used with white light, while the method of Figure 3 (S1 + S2 + S3) can be used with different light colors instead of white (e.g. increased blue and/or decreased red).

### Experimental Evidence

Experimental activity performed on salmon smolts indicate that above lighting regimes proposed producing smolts faster than conventional lighting regimes.

12 tanks were stocked with 150 fish with a mean weight of approximately 40 g per tank and divided into 4 treatments using LED lights: Blue (labelled "B", spectrum between 400nm and 500nm), Green (labelled "G", spectrum between 500nm and 580nm), Red (labelled "R", spectrum between 580nm and 700nm) or White (labelled "W", spectrum between 400nm and 780nm which is perceived by humans as white light)). Each tank was associated with a lighting system comprising a lighting apparatus arranged to provide light to the volume of water in the tank, and a lighting controller arranged to control the lights of the lighting apparatus.

Initially, all treatments were been exposed to a light intensity of 5 W/m² (optical W) in continuous light (i.e. for 24 hours a day) for a 400 degree days.

Hence, this first time period of continuous light for all four treatments corresponds to steps S1 and S1' of Figures 2 and 3.

Then, all four treatments were placed on a 12:12 "short day" (SD) regime for 400 degree days to simulate winter lighting conditions. In other words, for a second period of 400 degree days the treatments were subjected to plurality of simulated day periods and night periods each of 12 hours long.

All four treatments were subjected to a light intensity of 5 W/m² in each day period.

During each night period, the Red, Green and Blue treatments had their intensities reduced to 0.1W/m², whereas the White treatment was placed on a true dark night period to act as control. Hence, this second time period of SD day/night cycles corresponds to steps S2 and S2' of Figures 2 and 3 for the Red, Green and Blue treatments. The White treatment, however, was subjected to darkness in each night period.

After the end of the short day regime, the tanks were returned to continuous light (i.e. for 24 hours a day) at an intensity of 5 W/m². Hence, this third time period of continuous light for all four treatments corresponds to step S3 of Figure 3.

Terminal gill samples were collected at the start of the short day regime, 100 degree days before the end of the short day regime, until 1000 degree days.

In each tank a sub population of 90 PIT (Passive Integrated Transponder) tagged fish were maintained and used for assessing growth and development. After 400 degree days, tagged fish were transferred to a saltwater tank system and grown for a period of 6 months. Saltwater gill NKA (Gill Na+/K+-ATPase) was assessed after around 250 degree days and growth and condition assessed periodically.

Data produced from this study is shown in Figures 4 and 5.

Figure 4 shows a graph of ATPase activity against degree days port "winter" photoperiod. The letters "a", "b", "ab" are significance letters, and demonstrate whether there are statistical differences between values and denote this with a lowercase superscript. Different letter are significantly different values, shared letters are similar. Figure 4 shows that the Blue treatment experienced a rise in NKA before the other treatments and once this was achieved the values were maintained suggesting earlier smoltification (the change from a fresh water to salt water competent fish) and as a result an increase in the smolt transfer window. These fish were maintained in fresh water past the point at which they would normally be kept and so the NKA activity regresses as it is energetically expensive to maintain. This is why the values drop. All treatments behave similarly from 400DD.

Figure 5 shows a graph of weight (g) against degree days for Blue, Green, Red and White light for a 24LL treatment and a SNP treatment. 24LL refers to the fish being exposed to continuous lighting i.e. no dark period; SNP refers to simulated natural photoperiod. This graph shows the growth of groups of fish exposed to different coloured lights during freshwater and smoltification and then transferred to seawater (tanks with pumped seawater). Seawater tanks are lit with white lights and are under either continuous lighting or a simulated natural photoperiod. This figure shows that transfer to 24LL results in higher growth in all groups and that the structure of the population seen at transfer is overridden, i.e. poorer growing groups such as the Red catch up to the other colours. It shows that if transferring to SNP then prior light history impacts upon future growth performance, transferring to continuous lighting however results in the removal of prior growth patterns.

The study shown in relation to Figures 4 and 5 clearly demonstrates that using an intensity fluctuation rather than a true dark period can induce early smoltification and improve smoltification. Early smoltification is important for the industry due to followings: 1) shorter period of time before sea water release meaning different release times all year around, 2) lower costs for the industry because of earlier transfer. Improved smoltification is important for the industry due to following: 1) decreased mortality after sea transfer directly translated in cost win for the industry; 2) stronger fish enabling improved growth in further development.

In addition, at the light levels used both maximum and minimum levels are respectively above and below the day/night thresholds required for entrainment of the SD period. If light level is higher than a certain level, the fish will not experience the short day period. For example, during summer the fish experience a long day period corresponding to 24 hours continuous light, while in the winter there is a clear signal of day and night due to light levels.

At 400 degree days all groups exhibited similar synchronicity within the population demonstrating that all individuals had successfully perceived the "winter" signal. Post transfer sea water performance was comparable between the groups. In addition, these results indicate a potential maximum light level for the night period. It is shown that the spectrum impacts the moment of smoltification and how long good quality smoltification lasts. In particular, as can be seen from Figure 4, blue light results in early smoltification (advancing smoltification by 400 degree days) while red and white light have the smallest window of smoltification. Also, as can be seen from Figure 5, growth of fish under red light is behind all other light treatments.

As discussed, embodiments of the invention can provide a lighting controller for a lighting system that comprises a lighting apparatus including one or more lights arranged to provide light to promote smoltification of salmon in a volume of water. The lighting controller controls light output of the lighting apparatus so that continuous light is provided to the volume of water for a first predetermined period lasting at least 24 hours; and so that a plurality of simulated day periods and night periods are provided to the volume of water for a second predetermined period, the second predetermined period following the first predetermined period. During the second predetermined period, an intensity of the light provided to the volume of water in a night period is non-zero and up to 20% of an intensity of the light provided to the volume of water in a day period.

Such lighting controller can improve the development of salmon by providing a certain light regime. This can be used for salmon smoltification using a day-night rhythm where the night is not completely dark but illuminated with very little light. The percentage of light intensity during the night time is below 20% of the light intensity during the day. The fish smoltify faster under this regime than under day-night regime with complete darkness during the night. This lighting regime can be applied in order to improve the development of fish in onshore, offshore and marine environment applications.

By keeping the fish under very little light during the night periods of the second predetermined period, the gene expression related to smoltification process is active and amplified due to little light during the night, and this helps accelerate the smoltification process.

The lighting controller may be retrofitted to an existing lighting system. Alternatively, the lighting controller may be supplied or installed with a lighting system comprising a lighting apparatus. The lighting system itself may be retrofitted to an existing salmon farming system or may be supplied or installed such a salmon farming system. Hence, embodiments of the invention can also provide a lighting system for promoting smoltification of salmon in a volume of water, or a salmon farming system.

Also provided is a method of providing light to salmon in a volume of water to promote smoltification: providing continuous light to the volume of water for a first predetermined period of at least 24 hours; and providing light to the volume of water for a second predetermined period comprising a plurality of simulated day periods and night periods, the second predetermined period following the first predetermined period; wherein, during the second predetermined period, an intensity of the light provided to the volume of water in a night period is non-zero and up to 20% of an intensity of the light provided to the volume of water in a day period.

Embodiments of the invention can also provide a computer readable medium carrying computer readable code for controlling a lighting controller to carry out the method of any the aspects discussed herein.

The above embodiments as described are only illustrative, and not intended to limit the technique approaches of the present invention.

## Claims

1. A lighting controller (220) for a lighting system (200) that comprises a lighting apparatus (210) including one or more lights arranged to provide light to promote smoltification of salmon in a volume of water (110);
wherein the lighting controller (220) is arranged to:
send control information to the lighting system (200) to control light output of the lighting apparatus (210) so that continuous light is provided to the volume of water for a first predetermined period lasting at least 24 hours; and
send control information to the lighting system (200) to control light output of the lighting apparatus (210) so that a plurality of simulated day periods and night periods are provided to the volume of water (110) for a second predetermined period, the second predetermined period following the first predetermined period; **characterized in that** during the second predetermined period, an intensity of the light provided to the volume of water in a night period is non-zero and up to 20% of an intensity of the light provided to the volume of water in a day period.

2. The lighting controller (220) according to claim 1, wherein the intensity of the light provided to the volume of water in the night period is from 0.1% to 20% of the intensity of the light provided to the volume of water in the day period.

3. The lighting controller (220) according to claim 1 or 2, wherein, during the second predetermined period, the day periods are shorter in length than the night periods.

4. The lighting controller (220) according to any one of claims 1 to 3, wherein the first predetermined period lasts from 300 to 600 degree days.

5. The lighting controller (220) according to any one of claims 1 to 4, wherein the second predetermined period lasts from 300 to 600 degree days.

6. The lighting controller (220) according to any one of claims 1 to 5, wherein the lighting controller (220) is further arranged to send control information to the lighting system (200) to control light output of the lighting apparatus (210) so that continuous light is provided to the volume of water for a third predetermined period after the second predetermined period, wherein the third predetermined period lasting at least 24 hours, optionally wherein the third predetermined period lasts from 300 to 600 degree days.

7. The lighting controller (220) according to any one of claims 1 to 6, wherein the lighting controller (220) is further arranged to send control information to the lighting system (200) to control light output of the lighting apparatus (210) so that the light provided to the volume of water in each predetermined period has an increased intensity of blue light when compared to white light.

8. The lighting controller (220) according to claim 7, wherein the increase in intensity of blue light when compared to white light is greater than 10%.

9. The lighting controller (220) according to any one of claims 1 to 8, wherein the lighting controller (220) is further arranged to send control information to the lighting system (200) to control light output of the lighting apparatus (210) so that the light provided to the volume of water in each predetermined period has a decreased intensity of red light when compared to white light.

10. The lighting controller (220) according to claim 9, wherein the decrease in intensity of red light when compared to white light is greater than 10%.

11. A lighting system (200) for promoting smoltification of salmon in a volume of water, comprising:
a lighting apparatus (210) comprising one or more lights arranged to provide light to the volume of water; and
a lighting controller (220) according to any one of claims 1 to 10.

12. A salmon farming system (10), comprising:
a tank (100) comprising a volume of water (110) containing aquatic animals; and
a lighting system (200) according to claim 11.

13. A computer readable medium carrying computer readable code for controlling a lighting controller to:
provide continuous light to a volume of water for a first predetermined period lasting at least 24 hours; and
provide light to the volume of water for a second predetermined period comprising a plurality of simulated day periods and night periods, the second predetermined period following the first predetermined period;
wherein, during the second predetermined period, an intensity of the light provided to the volume of water in a night period is non-zero and up to 20% of an intensity of the light provided to the volume of water in a day period.

14. The computer readable medium according to claim 13, wherein the computer readable code is for controlling the lighting controller to provide continuous light to the volume of water for a third predetermined period, the third predetermined period following the second predetermined period.

## Patentansprüche

1. Beleuchtungssteuerung (220) für ein Beleuchtungssystem (200), das eine Beleuchtungsvorrichtung (210) umfasst, die eine oder mehrere Leuchten einschließt, die eingerichtet sind, um Licht bereitzustellen, um eine Smoltifizierung von Lachs in einem Wasservolumen (110) zu fördern;
wobei die Steuerung (220) eingerichtet ist zum:
Senden von Steuerinformationen an das Beleuchtungssystem (200), um eine Lichtabgabe der Beleuchtungsvorrichtung (210) zu steuern, sodass ein kontinuierliches Licht für eine erste vorbestimmte Periode, die mindestens 24 Stunden andauert, dem Wasservolumen bereitgestellt wird; und
Senden von Steuerinformationen an das Beleuchtungssystem (200), um die Lichtabgabe der Beleuchtungsvorrichtung (210) zu steuern, sodass eine Vielzahl von simulierten Tagesperioden und Nachtperioden dem Wasservolumen (110) für eine zweite vorbestimmte Periode bereitgestellt wird, wobei die zweite vorbestimmte Periode auf die erste vorbestimmte Periode folgt,
**dadurch gekennzeichnet, dass** während der zweiten vorbestimmten Periode eine Intensität des Lichts, das dem Wasservolumen in einer Nachtperiode bereitgestellt wird, nicht null und bis zu 20 % einer Intensität des Lichts beträgt, das dem Wasservolumen in einer Tagesperiode bereitgestellt wird.

2. Beleuchtungssteuerung (220) nach Anspruch 1, wobei die Intensität des Lichts, das dem Wasservolumen in der Nachtperiode bereitgestellt wird, von 0,1 % bis 20 % der Intensität des Lichts beträgt, das dem Wasservolumen in der Tagesperiode bereitgestellt wird.

3. Beleuchtungssteuerung (220) nach Anspruch 1 oder 2, wobei während der zweiten vorbestimmten Periode die Tagesperioden eine kürzere Länge als die Nachtperioden vorweisen.

4. Beleuchtungssteuerung (220) nach einem der Ansprüche 1 bis 3, wobei die erste vorbestimmte Periode von 300 bis 600 Gradtagen andauert.

5. Beleuchtungssteuerung (220) nach einem der Ansprüche 1 bis 4, wobei die zweite vorbestimmte Periode von 300 bis 600 Gradtagen andauert.

6. Beleuchtungssteuerung (220) nach einem der Ansprüche 1 bis 5, wobei die Beleuchtungssteuerung (220) ferner eingerichtet ist, um Steuerinformationen an das Beleuchtungssystem (200) zu senden, um die Lichtabgabe der Beleuchtungsvorrichtung (210) zu steuern, sodass ein kontinuierliches Licht für eine dritte vorbestimmte Periode nach der zweiten vorbestimmten Periode dem Wasservolumen bereitgestellt wird, wobei die dritte vorbestimmte Periode mindestens 24 Stunden andauert, optional wobei die dritte vorbestimmte Periode von 300 bis 600 Gradtagen andauert.

7. Beleuchtungssteuerung (220) nach einem der Ansprüche 1 bis 6, wobei die Beleuchtungssteuerung (220) ferner eingerichtet ist, um Steuerinformationen an das Beleuchtungssystem (200) zu senden, um die Lichtabgabe der Beleuchtungsvorrichtung (210) zu steuern, sodass das Licht, das dem Wasservolumen in jeder vorbestimmten Periode bereitgestellt wird, eine erhöhte Intensität von blauem Licht im Vergleich zu weißem Licht aufweist.

8. Beleuchtungssteuerung (220) nach Anspruch 7, wobei die Erhöhung der Intensität von blauem Licht im Vergleich zu weißem Licht mehr als 10 % beträgt.

9. Beleuchtungssteuerung (220) nach einem der Ansprüche 1 bis 8, wobei die Beleuchtungssteuerung (220) ferner eingerichtet ist, um Steuerinformationen an das Beleuchtungssystem (200) zu senden, um die Lichtabgabe der Beleuchtungsvorrichtung (210) zu steuern, sodass das Licht, das dem Wasservolumen in jeder vorbestimmten Periode bereitgestellt wird, eine verringerte Intensität von rotem Licht im Vergleich zu weißem Licht aufweist.

10. Beleuchtungssteuerung (220) nach Anspruch 9, wobei die Verringerung der Intensität von rotem Licht im Vergleich zu weißem Licht mehr als 10 % beträgt.

11. Beleuchtungssystem (200) zum Fördern von Smoltifizierung von Lachs in einem Wasservolumen, umfassend:
eine Beleuchtungsvorrichtung (210), umfassend eine oder mehrere Leuchten, die eingerichtet sind, um dem Wasservolumen Licht bereitzustellen; und
eine Lichtsteuerung (220) nach einem der Ansprüche 1 bis 10.

12. Lachszuchtsystem (10), umfassend:
einen Behälter (100), umfassend ein Wasservolumen (110), das aquatische Lebewesen enthält; und
ein Beleuchtungssystem (200) nach Anspruch 11.

13. Computerlesbares Medium, das computerlesbaren Code zum Steuern einer Beleuchtungssteuerung trägt zum:
Bereitstellen eines kontinuierlichen Lichts einem Wasservolumen für eine erste vorbestimmte Periode, die mindestens 24 Stunden andauert; und
Bereitstellen von Licht dem Wasservolumen für eine zweite vorbestimmte Periode, umfassend eine Vielzahl von simulierten Tagesperioden und Nachtperioden, wobei die zweite vorbestimmte Periode auf die erste vorbestimmte Periode folgt;
wobei während der zweiten vorbestimmten Periode eine Intensität des Lichts, das dem Wasservolumen in einer Nachtperiode bereitgestellt wird, nicht null und bis zu 20 % einer Intensität des Lichts beträgt, das dem Wasservolumen in einer Tagesperiode bereitgestellt wird.

14. Computerlesbares Medium nach Anspruch 13, wobei der computerlesbare Code zum Steuern der Beleuchtungssteuerung dient, um ein kontinuierliches Licht dem Wasservolumen für eine dritte vorbestimmte Periode bereitzustellen, wobei die dritte vorbestimmte Periode auf die zweite vorbestimmte Periode folgt.

## Revendications

1. Organe de commande d'éclairage (220) pour un système d'éclairage (200) qui comprend un appareil d'éclairage (210) comportant une ou plusieurs lampes agencées pour fournir de la lumière pour promouvoir la smoltification de saumon dans un volume d'eau (110) ;
l'organe de commande d'éclairage (220) étant agencé pour :
envoyer des informations de commande au système d'éclairage (200) pour commander une sortie de lumière de l'appareil d'éclairage (210) de sorte que de la lumière continue est fournie au volume d'eau pendant une première période prédéterminée qui dure au moins 24 heures ; et
envoyer des informations de commande au système d'éclairage (200) pour commander une sortie de lumière de l'appareil d'éclairage (210) de sorte qu'une pluralité de périodes de jour et périodes de nuit simulées sont fournies au volume d'eau (110) pendant une deuxième période prédéterminée, la deuxième période prédéterminée suivant la première période prédéterminée ;
**caractérisé en ce que** durant la deuxième période prédéterminée, une intensité de la lumière fournie au volume d'eau dans une période de nuit est différente de zéro et va jusqu'à 20 % d'une intensité de la lumière fournie au volume d'eau dans une période de jour.

2. Organe de commande d'éclairage (220) selon la revendication 1, dans lequel l'intensité de la lumière fournie au volume d'eau dans la période de nuit va de 0,1 % à 20 % de l'intensité de la lumière fournie au volume d'eau dans la période de jour.

3. Organe de commande d'éclairage (220) selon la revendication 1 ou 2, dans lequel, durant la deuxième période prédéterminée, les périodes de jour sont plus courtes en longueur que les périodes de nuit.

4. Organe de commande d'éclairage (220) selon l'une quelconque des revendications 1 à 3, dans lequel la première période prédéterminée dure de 300 à 600 degrés-jours.

5. Organe de commande d'éclairage (220) selon l'une quelconque des revendications 1 à 4, dans lequel la deuxième période prédéterminée dure de 300 à 600 degrés-jours.

6. Organe de commande d'éclairage (220) selon l'une quelconque des revendications 1 à 5, l'organe de commande d'éclairage (220) étant en outre agencé pour envoyer des informations de commande au système d'éclairage (200) pour commander une sortie de lumière de l'appareil d'éclairage (210) de sorte que de la lumière continue est fournie au volume d'eau pendant une troisième période prédéterminée après la deuxième période prédéterminée, la troisième période prédéterminée durant au moins 24 heures, facultativement la troisième période prédéterminée durant de 300 à 600 degrés-jours.

7. Organe de commande d'éclairage (220) selon l'une quelconque des revendications 1 à 6, l'organe de commande d'éclairage (220) étant en outre agencé pour envoyer des informations de commande au système d'éclairage (200) pour commander une sortie de lumière de l'appareil d'éclairage (210) de sorte que la lumière fournie au volume d'eau dans chaque période prédéterminée a une intensité augmentée de lumière bleue par comparaison avec la lumière blanche.

8. Organe de commande d'éclairage (220) selon la revendication 7, dans lequel l'augmentation d'intensité de la lumière bleue par comparaison avec la lumière blanche est supérieure à 10 %.

9. Organe de commande d'éclairage (220) selon l'une quelconque des revendications 1 à 8, l'organe de commande d'éclairage (220) étant en outre agencé pour envoyer des informations de commande au système d'éclairage (200) pour commander une sortie de lumière de l'appareil d'éclairage (210) de sorte que la lumière fournie au volume d'eau dans chaque période prédéterminée a une intensité diminuée de lumière rouge par comparaison avec la lumière blanche.

10. Organe de commande d'éclairage (220) selon la revendication 9, dans lequel la diminution d'intensité de la lumière rouge par comparaison avec la lumière blanche est supérieure à 10 %.

11. Système d'éclairage (200) permettant de promouvoir une smoltification de saumon dans un volume d'eau, comprenant :
un appareil d'éclairage (210) comprenant une ou plusieurs lampes agencées pour fournir de la lumière au volume d'eau ; et
un organe de commande d'éclairage (220) selon l'une quelconque des revendications 1 à 10.

12. Système d'élevage de saumons (10), comprenant :
un réservoir (100) comprenant un volume d'eau (110) contenant des animaux aquatiques ; et
un système d'éclairage (200) selon la revendication 11.

13. Support lisible par ordinateur portant un code lisible par ordinateur permettant de commander un organe de commande d'éclairage pour :
fournir de la lumière continue à un volume d'eau pendant une première période prédéterminée durant au moins 24 heures ; et
fournir de la lumière au volume d'eau pendant une deuxième période prédéterminée comprenant une pluralité de périodes de jour et périodes de nuit simulées, la deuxième période prédéterminée suivant la première période prédéterminée ;
dans lequel, durant la deuxième période prédéterminée, une intensité de la lumière fournie au volume d'eau dans une période de nuit est différente de zéro et va jusqu'à 20 % d'une intensité de la lumière fournie au volume d'eau dans une période de jour.

14. Support lisible par ordinateur selon la revendication 13, dans lequel le code lisible par ordinateur sert à commander l'organe de commande d'éclairage pour fournir de la lumière continue au volume d'eau pendant une troisième période prédéterminée, la troisième période prédéterminée suivant la deuxième période prédéterminée.
